**Europäisches Patentamt**

**European Patent Office**

**Office européen des brevets**

(11) Veröffentlichungsnummer: **0 432 656 A2**

# (12) EUROPÄISCHE PATENTANMELDUNG

(21) Anmeldenummer: **90123523.4**

(22) Anmeldetag: **07.12.90**

(51) Int. Cl.⁵ **G01N 21/59**, G01N 21 03

(30) Priorität: **11.12.89 DE 3940821**
**01.08.90 DE 4024416**

(43) Veröffentlichungstag der Anmeldung:
**19.06.91 Patentblatt 91/25**

(84) Benannte Vertragsstaaten:
**BE DE FR GB IT NL**

(71) Anmelder: **ROSEMOUNT GMBH & CO.**
**Wilhelm-Rohn-Strasse 51**
**W-6450 Hanau 1(DE)**

(72) Erfinder: **Heimel, Helmut**
**Marienstrasse 4**
**W-6451 Ronneburg(DE)**
Erfinder: **Koch, Helmut**
**Hauptstrasse 7**
**W-6454 Bruchköbel(DE)**
Erfinder: **Krause, Hans, Dr.**
**Eichendorffstrasse 4**
**W-6350 Bad Nauheim(DE)**
Erfinder: **Patton, Roger**
**Hauptstrasse 9**
**W-8752 Geiselbach(DE)**

(74) Vertreter: **Haar, Lucas Heinz Jörn, Dipl.-Ing.**
**Königsberger Strasse 23**
**W-6360 Friedberg/Hessen 1(DE)**

(54) **Analysengerät.**

(57) Ein Analysengerät zur Durchführung von Absorptionsspektralanalysen nach dem Prinzip der Vergleichsstrahlmessung weist in einem Gehäuse (1), das im Strahlengang zwischen einer Lichtquelle und einem Signalempfänger auf einer optischen Bank befestigbar ist, einen einstückigen, herausnehmbaren Küvettenblock (10) auf, der im Bereich des Meßstrahls eine Meßkammer (11) enthält und im Bereich des Vergleichsstrahls einen festen Körper bildet. Der Küvettenblock (10) hat die Form eines Quaders und ist aus Quarz hergestellt. Eine Seitenfläche des Küvettenblocks (10) ist als Anschlußfläche (16) ausgebildet und mit einer Schicht (17) aus lichtundurchlässigem, schwarzem Quarz versehen. Ein auf der Anschlußfläche (16) angeordnetes Anschlußelement (18) dient zur Zuführung der Probe in die Meßkammer (11).

FIG. 1

Xerox Copy Centre

## ANALYSENGERÄT

Die Erfindung betrifft ein Analysengerät zur Durchführung von Absorptionsspektralanalysen nach dem Prinzip der Vergleichsstrahlmessung, bei dem ein die in einer Meßkammer befindliche Probe durchdringender Meßstrahl und ein Vergleichsstrahl, die von einer gemeinsamen Lichtquelle ausgehen, von einem Signalempfänger erfaßt und miteinander verglichen werden.

Analysengeräte der angegebenen Art werden zur Bestimmung von Art und Konzentration eines Gases oder einer Flüssigkeit in einem Gas- oder Flüssigkeitsgemisch verwendet. Dabei wird die selektive Strahlungsabsorbtion des untersuchten Mediums photometrisch gemessen und in eine intensitätsproportionale Spannung umgesetzt.

Wesentliches Bauelement des physikalisch-mechanischen Teils derartiger Analysengeräte ist die mit infrarotem, sichtbarem oder ultraviolettem Licht durchstrahlte, die Probe enthaltende Meßkammer, in der eine konzentrationsabhängige Lichtabsorption durch die Probe stattfindet. Diese Meßkammer muß für jeden Meßvorgang möglichst sauber sein, damit das Meßergebnis nicht durch die Anwesenheit anderer Substanzenbeeinträchtigt wird. Die Meßkammer darf sich nicht durch Einwirkung der Probe verändern. Jede Veränderung wirkt auf das Meßsystem wie eine Absorptions- oder Transmissionssteigerung und führt dadurch zu einer Nullpunktdrift.

Bei bekannten Analysengeräten wird die Meßkammer durch eine rohrförmige Küvette gebildet, die in Längsrichtung durch eine ebene Trennwand in eine Meßseite und eine Vergleichsseite unterteilt ist. In die Meßseite wird die Probe geleitet. Die Vergleichsseite der Küvette ist normalerweise mit Stickstoff gefüllt und gasdicht verschlossen. Es ist bekannt, die Küvette aus Edelstahl herzustellen, wobei die Oberfläche der Meßkammer mit besonderen Werkstoffen, wie Gold, beschichtet sein kann, um die Widerstandsfähigkeit gegenüber aggressiven Proben zu erhöhen. Kleinste, bei der Herstellung kaum vermeidbare Fehler in der Beschichtung können aber bereits die Lebensdauer der Küvette erheblich herabsetzen. Bessere Ergebnisse konnten mit Küvetten erzielt werden, die aus Quarz hergestellt waren, indem zwei Halbschalen aus Quarz durch Sintern zu einem Küvettenrohr miteinander verbunden wurden. Über diese Bauweise ließen sich jedoch aus konstruktiven Gründen keine kleinen Küvettenlängen realisieren.

Ein weiteres Problem von Absorptionsspektralanalysatoren besteht darin, daß man grundsätzlich eine gekrümmte Kennlinie erhält. Dies führt dazu, daß die Empfindlichkeit in dem Meßbereich, in dem die Kennlinie flacher verläuft, abnimmt, was unerwünscht ist. Um diesen Effekt zu verringern, ist es bekannt, die elektronische Signalverstärkung mit einer signalabhängigen Verstärkungsregelung zu versehen, die eine Teilbegradigung der Kennlinie herbeiführt. Die Meßempfindlichkeit des physikalischen Teils des Analysengeräts läßt sich dadurch jedoch nicht erhöhen.

Aufgabe der Erfindung ist es, ein Analysengerät der eingangs genannten Art hinsichtlich seiner Empfindlichkeit, seiner Handhabbarkeit und seiner Lebensdauer zu verbessern.

Zur Lösung dieser Aufgabe ist erfindungsgemäß vorgesehen, daß der Vergleichsstrahl durch einen der Meßkammer benachbarten, festen Körper geleitet wird, der aus dem gleichen transparenten Material besteht, wie die Fenster der Meßkammer. Überraschenderweise hat sich gezeigt, daß durch die erfindungsgemäße Anordnung eines transparenten, festen Körpers eine physikalische Beeinflussung des Meßsignals im Sinne einer Begradigung des Signalverlaufs erreicht werden kann. Entsprechend werden die Unterschiede in der Empfindlichkeit verringert, so daß die Empfindlichkeit im gesamten Meßbereich im wesentlichen gleich ist. Die Anordnung eines festen Körpers im Bereich des Vergleichsstrahls eröffnet dem Fachmann weiterhin neue Möglichkeiten in der Gestaltung der Meßkammer, durch die sich Verbesserungen hinsichtlich Handhabung, Meßgenauigkeit und Lebensdauer erzielen lassen.

Für Analysen, bei denen die Fensterflächen der Meßkammer durch Einwirkung der Probe in ihrer Oberflächenbeschaffenheit verändert werden können oder bei denen das Probegut Verunreinigungen enthält, die sich auf den Fensterflächen niederschlagen, kann nach einem weiteren Vorschlag der Erfindung vorgesehen sein, daß der feste Körper eine im Vergleichsstrahl liegende Vergleichskammer enthält, deren Absorptionslänge erheblich geringer ist als die Absorptionslänge der Meßkammer und die ebenfalls mit der in der Meßkammer enthaltenen Probe gefüllt ist. Durch die erfindungsgemäße Weiterbildung lassen sich Störungen des Meßsignals, die durch eine Veränderung der Fensteroberflächen der Meßkammer hervorgerufen werden, weitgehend eliminieren, da der Vergleichsstrahl durch die Anordnung der Vergleichskammer den gleichen Störeinflüssen unterliegt. Zwar bringt die Vergleichskammer den Nachteil mit sich, daß das Gesamtsignalvermindert wird und die Abhängigkeit vom Grundpegel des Signals zunimmt, dieser Nachteil wird aber durch die Beseitigung verschmutzungsbedingter Störeinflüsse bei weitem aufgewogen. Ebenso konnte auch bei dieser Ausgestaltung des Analysengeräts eine vorteilhafte Begradigung des Signalverlaufs beobachtet werden.

Eine weitere Ausgestaltung der Erfindung sieht vor, daß die Meßkammer und der feste Körper für den Vergleichsstrahl durch einen einstückigen Küvettenblock gebildet sind, der auswechselbar in einen mit der optischen Bank fest verbindbaren Halter eingesetzt ist. Diese Ausgestaltung macht es möglich, den festen Körper und die Meßkammer aufeinander abzustimmen. Sie trägt weiterhin zu einer erheblichen Wartungsvereinfachung bei, da die Meßkammer zum Reinigen oder Auswechseln leicht entnommen und wieder eingebaut werden kann, ohne die Justierung der optischen Bank zu beeinträchtigen. Da der feste Körper und die Meßkammer durch ein einstückiges Bauteil gebildet sind, ist ihre gegenseitige optische Justierung immer gegeben und die Symmetrie von Meßstrahl und Vergleichsstrahl gewährleistet. Bei einem derartigen, einstückigen Küvettenblock ist es erfindungsgemäß von Vorteil, wenn die Vergleichskammer von der Meßkammer abzweigt und durch die Meßkammer mit Probemedium gefüllt wird.

Vorzugsweise ist die Oberfläche des Küvettenblocks in Bezug auf die Mittelebene zwischen Meß- und Vergleichsstrahl symmetrisch. Nicht probenbedingte Spektralunterschiede zwischen dem Meßstrahl und dem Vergleichsstrahl lassen sich dadurch auf ein Minimum reduzieren. Vorteilhaft ist weiterhin, wenn der Küvettenblock vollständig aus einem homogenen, inerten Werkstoff, vorzugsweise aus Glas, Quarz, Kalziumfluorid oder Bariumfluorid besteht. Veränderungen der Meßkammer durch aggressive Proben werden dadurch unterbunden.

Für die Zufuhr der Probe hat der Küvettenblock erfindungsgemäß eine ebene, seitliche Anschlußfläche, von der wenigstens eine Anschlußöffnung zur Meßkammer führt. Die seitliche Anschlußfläche oder zusätzlich auch die dieser entgegengesetzte Fläche des Küvettenblocks ist zweckmäßig mit einer lichtundurchlässigen, vorzugsweise schwarzen Schicht abgedeckt. Hierdurch wird erreicht, daß die an der Anschlußfläche anliegenden Anschlußbauteile von dem Meßstrahl optisch nicht erfaßt werden können, so daß Veränderungen an diesen außerhalb des Küvettenblocks liegenden Bauteilen ohne Einfluß bleiben und nicht zu einer Störung der Messung oder zu einer Nullpunktverschiebung führen können. Die lichtundurchlässige Abdeckung der der Anschlußfläche entgegengesetzten Fläche verbessert die Symmetrie von Meßstrahl und Vergleichsstrahl.

Innerhalb des Küvettenkörpers kann eine stärkere optische Trennung zwischen Meß- und Vergleichsstrahl dadurch erzielt werden, daß der Küvettenblock in der Mittelebene zwischen der Meßkammer und dem festen Körper auf der dem Signalempfänger zugekehrten Seite einen ebenen Trennschlitz aufweist. Ist für besonders empfindliche Messungen eine stärkere optische Trennung gewünscht, so kann der Küvettenblock in der Mittelebene eine lichtundurchlässige Schicht aufweisen.

Die lichtundurchlässigen Schichten auf der Anschlußfläche, der entgegengesetzten Fläche und in der Mittelebene bestehen bei einem aus Quarz hergestellen Küvettenblock vorzugsweise aus schwarzem Quarz. Der Küvettenblock und oder die lichtundurchlässigen Schichten können dabei erfindungsgemäß aus einzelnen Platten bestehen, die gasdicht miteinander verbunden, vorzugsweise miteinander verschmolzen sind.

Nach einem weiteren Vorschlag der Erfindung kann der Halter für den Küvettenblock aus einem Gehäuse bestehen, das einen Abschnitt des optischen Kanals bildet und eine seitliche, durch einen Deckel verschließbare Öffnung aufweist, durch die der Küvettenblock einsetzbar bzw. herausnehmbar ist. Die Innenfläche des Gehäuses kann mit strahlungsabsorbierendem Material beschichtet sein, so daß aus dem Küvettenblock austretendes Streulicht absorbiert wird und den Meßvorgang nicht stört. Das Gehäuse bildet einen Teil eines die Lichtquelle mit dem Signalempfänger verbindenden Tubus und sorgt dafür, daß der Tubus zum Aus-und Einbau des Küvettenblocks nicht zerlegt werden muß, so daß die optische Justierung bei diesem Vorgang erhalten bleibt.

Um die gasförmige oder flüssige Probe in die Meßkammer zu leiten, ist erfindungsgemäß ein Anschlußelement vorgesehen, das mit einer konzentrische Anschlußnuten enthaltenden Kontaktfläche auf die Anschlußfläche des Küvettenblocks aufsetzbar ist, wobei die an Anschlußleitungen angeschlossenen Anschlußnuten mit der Meßkammer in Verbindung treten. Zur Abdichtung kann zweckmäßig in einer die Anschlußnuten umgebenden Ringnut ein Dichtring angeordnet sein, der sich auf die Anschlußfläche des Küvettenblocks auflegt. Das Anschlußelement wird vorzugsweise von dem Deckel des Gehäuses getragen, so daß durch das Abnehmen des Deckels der Küvettenblock von den Anschlußleitungen getrennt wird.

Für die Analyse besonders aggressiver Proben, wie Chlor oder Ozon, sowie toxischer Proben, ist es erforderlich, den Küvettenblock mit einem neutralen Spülmedium, beispielsweise Stickstoff oder Luft zu umspülen, damit bei einem eventuellen Austreten der Probe das Gerät nicht beschädigt und Bedienungspersonen nicht gefährdet werden. Erfindungsgemäß wird das Umspülen des Küvettenblocks dadurch erreicht, daß das Anschlußelement von einem Schutzgehäuse umgeben ist, dessen Innenraum gemeinsam mit dem Innenraum des den Küvettenblock aufnehmenden Gehäuses mit einem Spülmedium durchspülbar ist.

Die Erfindung wird nachfolgend an Hand von Ausführungsbeispielen näher erläutert, die in der Zeichnung dargestellt sind. Es zeigen

Figur 1 einen Längsschnitt durch ein in den Tubus eines Absorptionsspektralanalysators einbaubares Gehäuse mit Küvettenblock und Anschlußelement,

Figur 2 einen Querschnitt durch das Gehäuse mit Küvettenblock und Anschlußelement gemäß Figur 1,

Figur 3 eine perspektivische Darstellung einer weiteren Ausführungsform eines erfindungsgemäßen Küvettenblocks,

Figur 4 einen Längsschnitt durch eine Ausführungsform eines erfindungsgemäßen Küvettenblocks mit einer von der Meßkammer abgezweigten Vergleichskammer und

Figur 5 einen Querschnitt durch den Küvettenblock gemäß Figur 4.

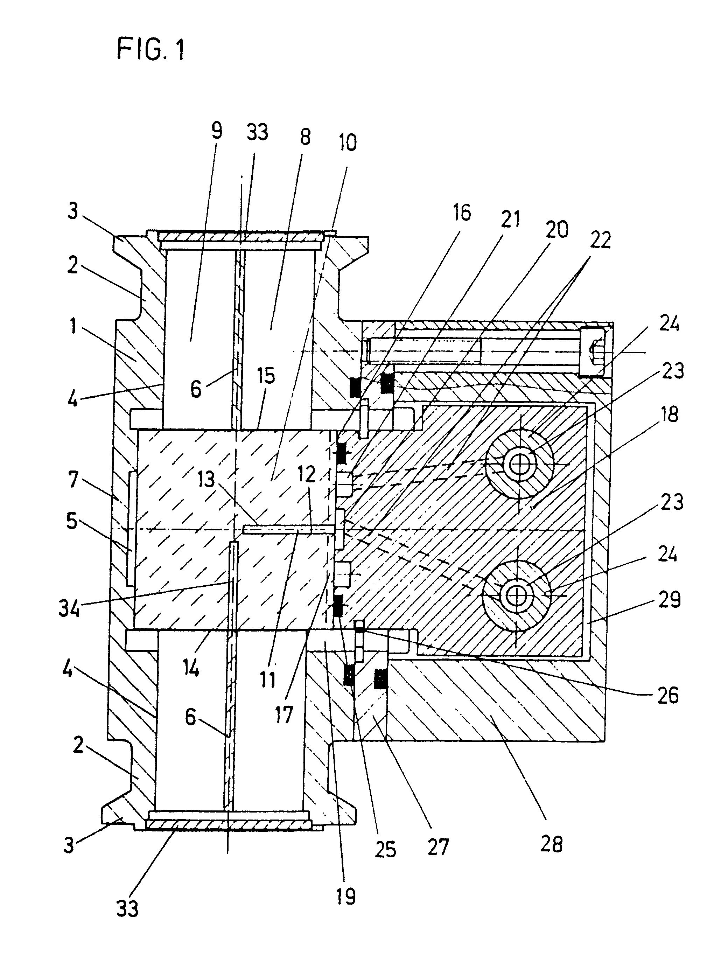

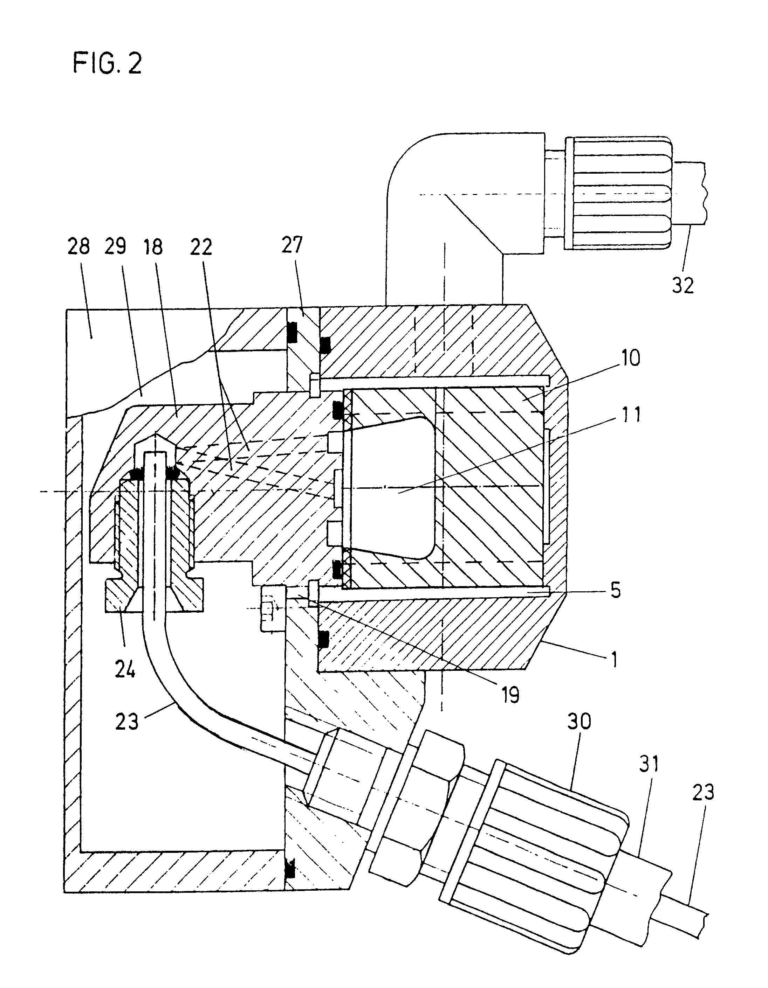

Das in den Figuren 1 und 2 dargestellte Gehäuse 1 hat im wesentlichen die Form eines Quaders, der an zwei entgegengesetzten Stirnseiten koaxiale rohrförmige Ansätze 2 aufweist, die an ihren Enden Befestigungsflansche 3 haben, mit denen das Gehäuse 1 in Stapelbauweise mit weiteren Bauelementen der optischen Einrichtung eines Analysengeräts verbindbar ist. Die Ansätze 2 weisen koaxiale Bohrungen 4 auf, die die Stirnseiten des Gehäuses 1 durchsetzen und in einen quaderförmigen Gehäuseinnenraum 5 münden. In die Bohrungen 4 sind Trennwände 6 eingesetzt, die in einer zum Gehäuseboden 7 parallelen Mittelebene der Bohrungen 4 liegen. Die Trennwände 6 unterteilen die Bohrungen 4 in eine oben liegende Meßseite 8 für den Durchtritt eines Meßstrahls und in eine unten liegende Vergleichsseite 9, für den Durchtritt eines Vergleichsstrahls. Im Gehäuseinnenraum 5 befindet sich ein quaderförmiger Küvettenblock 10, der vollständig aus Quarz besteht. Der Küvettenblock 10 liegt auf dem Gehäuseboden 7 auf und wird mit seinen Seitenflächen an den Seitenwänden des Gehäuseinnenraums 5 geführt. Der untere, zwischen den Vergleichsseiten 9 der Bohrungen 4 liegende Teil des Küvettenblocks 10 ist vollständig homogen und weist keine Hohlräume auf. Im oberen, zwischen den Meßseiten 8 liegenden Teil enthält der Küvettenblock 10 eine Meßkammer 11, die durch einen nach oben offenen Schlitz gebildet wird, der sich quer zur Längsachse der Bohrungen 4 erstreckt und dessen zur Längsachse der Bohrung 4 senkrechte Flächen 12, 13 optisch geschliffen und poliert sind. Ebenso sind die den Bohrungen 4 zugewandten Stirnflächen 14, 15 des Küvettenblocks 10 optisch geschliffen und poliert. Die Öffnung der Meßkammer 11 liegt in einer Anschlußfläche 16, die mit einer Schicht 17 aus lichtundurchlässigem, schwarzem Quarz versehen ist. Zur besseren optischen Trennung von Meßseite und Vergleichsseite ist der Küvettenblock 10 in seiner Mittelebene auf der dem Signalempfänger zugekehrten Seite mit einem ebenen Trennschlitz 34 versehen.

Auf der Anschlußfläche 16 liegt ein Anschlußelement 18 auf, das durch eine Öffnung 19 in der Oberseite des Gehäuses 1 in den Gehäuseinnenraum 5 hineinragt. In seiner auf dem Küvettenblock 10 aufliegenden Kontaktfläche weist das Anschlußelement 18 konzentrische Nuten 20, 21 auf, die mit der Meßkammer 11 in Verbindung stehen. Über Kanäle 22 sind die Nuten 20, 21 an Anschlußleitungen 23 angeschlossen, die über Verschraubungen 24 mit dem Anschlußelement 18 verbunden sind. Die Nuten 20, 21 sind von einer Ringnut umgeben, in der ein Dichtring 25 angeordnet ist, der das Anschlußelement 18 gegenüber dem Küvettenblock 10 abdichtet.

Das Anschlußelement 18 wird über eine geschlitzte Ringscheibe 26 von einem auf das Gehäuse 1 aufsetzbaren Deckel 27 gehalten. Der Deckel 27 bildet den Boden eines Schutzgehäuses 28, das auf den Deckel 27 aufsetzbar ist und das Anschlußelement 18 vollständig umschließt. Der Innenraum 29 des Schutzgehäuses 28 steht über die Öffnung im Deckel 27 und die Öffnung 19 des Gehäuses 1 mit dem Gehäuseinnenraum 5 in Verbindung. Über eine Verschraubung 30 im Deckel 27 ist der Innenraum 29 an eine Spülleitung 31 angeschlossen, durch die auch die Anschlußleitung 23 zum Anschlußelement 18 geführt ist. Eine zweite Spülleitung 32 ist mit einem Winkelstück an den Gehäuseinnenraum 5 angeschlossen. Über die Spülleitungen 31, 32 können der Küvettenblock 10 und das Anschlußelement 18 sowie die Anschlußleitungen 23 mit einem Spülmedium, beispielsweise Stickstoff umspült werden, um eventuell austretende Proben, die aggressiv oder toxisch sind, abführen zu können. Um den durchspülten Bereich des Analysengeräts einzugrenzen, sind die Bohrungen 4 nach außen mit Deckeln 33 aus geeignetem, transparentem Material verschlossen.

Mit der in den Figuren 1 und 2 dargestellten Anordnung wurden Absorptionsspektralanalysen von Chlor und Schwefeldioxid mit Konzentrationen zwischen 0% und 40% durchgeführt. Die Absorptionsstrecke in der Meßkammer betrug dabei 1 mm, hierzu kommen 23 mm Quarz im Bereich der Fenster. Die Vergleichsstrecke im Küvettenblock aus Quarz betrug 24 mm. Hierbei ergab sich ein Durchhang der Kennlinie des Meßsignals von weniger als 0,4%. Der Kennlinienverlauf war somit nahezu linear, was somit einer annähernd gleichen Empfindlichkeit im gesamten Meßbereich entspricht.

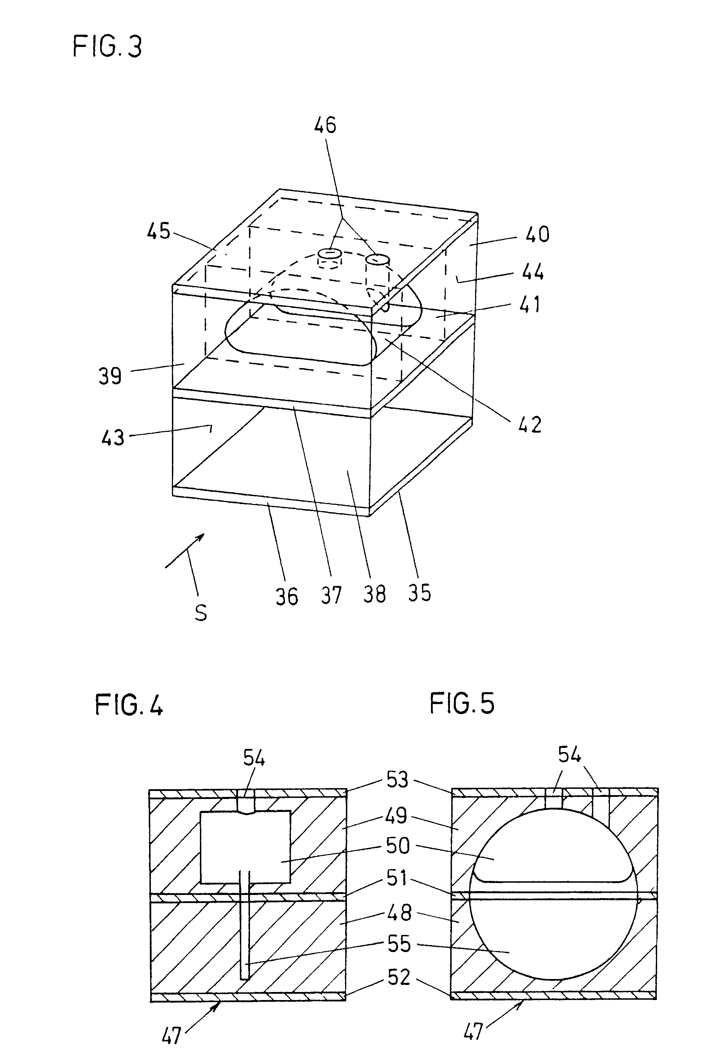

Der erfindungsgemäße Küvettenblock ermöglicht eine große Variationsbreite unterschiedlicher Küvettenlängen und damit eine Anpassung an unterschiedliche Analysenbedingungen.Eine Ausführung eines Küvettenblocks mit einer längeren Meßkammer zeigt Figur 3. Der in seiner Grundform quaderförmige Küvettenblock 35 wird in Richtung des Pfeiles S von dem Meßstrahl bzw. dem Vergleichsstrahl durchstrahlt. Der Küvettenblock 35 ist aus mehreren aus Quarz hergestellten Elementen zusammengesetzt, die anschließend durch ein Diffusionsverbindungsverfahren miteinander verschmolzen wurden. Die ursprünglichen Trennlinien zwischen den einzelnen Elementen sind durch gestrichelte Linien verdeutlicht. Zwischen einer dünnen Bodenplatte 36 und einer in der Trennebene zwischen dem Meßstrahl und dem Vergleichsstrahl liegenden Zwischenplatte 37, die beide aus schwarzem, undurchsichtigem Quarz bestehen, ist ein einziger massiver, quaderförmiger Körper 38 aus durchsichtigem Quarz vorgesehen, der die Vergleichsstrecke bildet. Auf der Zwischenplatte 37 befinden sich zwei ebenfalls massive, quaderförmige Elemente 39, 40, zwischen denen ein Element 41 angeordnet ist, das zur Bildung der Meßkammer 42 axial in einer dem Querschnitt des Meßstrahls angepassten Form durchbohrt ist. Die Elemente 39 - 41 bestehen ebenfalls aus Quarz. Die der Meßkammer zugekehrten Flächen der Elemente 39, 40 sind optisch geschliffen und poliert. Ebenso sind die im Strahlengang liegenden Stirnflächen 43, 44 des Küvettenblock 35 optisch geschliffen und poliert. Auf den Elementen 39 - 41 ist eine Deckelplatte 45 aus schwarzem Quarz angeordnet, die den gleichen Abstand von der Zwischenplatte 37 hat wie die Bodenplatte 36. Durch die Deckelplatte 45 führen Anschlußbohrungen 46 in die Meßkammer 42. Die Anschlußbohrungen 46 sind so angeordnet, daß sie beim Einbau des Küvettenblocks 35 in das in den Figuren 1 und 2 gezeigte Gehäuse 1 in die Nuten 20, 21 des Anschlußelements 18 münden.

Der Küvettenblock 35 zeichnet sich aufgrund seiner undurchsichtigen Deckflächen sowie der undurchsichtigen Trennfläche in seiner Mittelebene durch eine optimale Abschirmung von Störeinflüssen aus. Der höhere Herstellaufwand ist jedoch nur bei extremen Anforderungen an die Empfindlichkeit erforderlich.

Die beschriebenen Ausgestaltungen eines Küvettenblocks haben eine Reihe von Vorteilen:

Die mit Proben zu beladenden Teile des Küvettenblocks haben eine hohe Resistenz , da der Küvettenblock vollständig aus Quarz oder aus Glas gefertigt werden kann. Der verschmutzte Küvettenblock kann leicht entnommen, gereinigt und sehr einfach wieder eingebaut werden. Es hat sich gezeigt, daß mit dieser Anordnung nach einem Aus- und Einbau des Küvettenblocks problemlos mit nahezu unverändertem Nullpunkt des unverschmutzten Gesamtaufbaus weitergemessen werden kann. Bei gleichem Gesamtaufbau, d.h. ohne Wechsel des den Küvettenhalter bildenden Gehäuses können Absorptionslängen von Bruchteilen von Millimetern bis zu mehreren Zentimetern verwirklicht werden. Auch die Änderung der Absorptionslänge ist einfach, da lediglich ein Auswechseln des Küvettenkörpers erforderlich ist. Vor allem bei besonders aggressiven Gasen, wie Chlor, Ozon oder anderen radikalbildenden Gaskomponenten, sowie bei toxischen oder extrem toxischen Gasen, stellen herkömmliche Küvetten, mit ihren Anschlüssen und Leitungen ein Sicherheits- und Betriebsrisiko dar. Der erfindungsgemäße Küvettenblock ermöglicht in der oben beschriebenen Form eine vollständige Kapselung des Küvettenblocks und ihrer Anschlußarmaturen einschließlich der dazugehörigen Leitungen, so daß austretende Gase weggespült werden können. Durch Ausbildung der Vergleichsstrecke in einem massiven Körper aus Quarz wird die Krümmung der Signalkennlinie erheblich reduziert, was zu einer Steigerung der Empfindlichkeit in den ungünstigen Randzonen des Meßbereichs führt.

Eine Abwandlung des Küvettenblocks 35 ist in den Figuren 4 und 5 dargestellt. Dieser quaderförmige Küvettenblock 47 weist für den Vergleichsstrahl einen einzigen massiven Körper 48 und für den Meßstrahl einen aus quaderförmigen Elementen gebildeten Körper 49 auf, der eine Meßkammer 50 enthält. Die Körper 48 und 49 sind aus durchsichtigem Quarz hergestellt. Sie sind durch eine in der Trennebene liegenden Zwischenplatte 51 aus schwarzem, undurchsichtigem Quarz voneinander getrennt und mit einer Bodenplatte 52 bzw. einer Deckelplatte 53 versehen, die ebenfalls aus schwarzem, undurchsichtigem Quarz bestehen. In die Meßkammer 50 münden Anschlußbohrungen 54 zum Zu- und Abführen der Probe, beispielsweise eines Gases. Um für den Meßstrahl und den Vergleichsstrahl gleiche optische Bedingungen zu schaffen, zweigt von der Meßkammer 50 eine Vergleichskammer 55 ab, die aus der Meßkammer 50 ebenfalls mit dem Probenmedium gefüllt wird. Durch die Vergleichskammer 55 werden im Bereich des Vergleichsstrahls zwei zusätzliche Fensterflächen geschaffen, die im Bereich des Meßstrahls bereits vorhanden sind. Weiterhin wird durch das Füllen der Vergleichskammer 55 mit dem Probemedium dafür gesorgt, daß diese die Vergleichskammer begrenzenden Fensterflächen den gleichen Veränderungen unterliegen wie die Fensterflächen der Meßkammer 50. Das Meßsignal wird durch die unterschiedliche Absorptionslänge von Meßkammer 50 und Vergleichskammer 55 gewonnen. Die Absorptionslänge der Meßkammer 50 beträgt ein Vielfaches der Absorptionslänge der Vergleichskammer 55.

Bei dem beschriebenen Küvettenblock 47 stellen sich auf der Meßseite und auf der Vergleichsseite die gleichen verschmutzungs- oder korro- sionsbedingten Veränderungen an den Fensterflä- chenein, so daß diese Veränderungen nicht zu einer Veränderung des Meßsignals führen können. Das Gesamtsignal ergibt sich aus der Absorptionsdifferenz zwischen Meß- und Vergleichsseite, wo- bei die Absorptionslängenso aufeinander abge- stimmt werden können, daß der gleiche Meßeffekt erzielt wird wie bei einer Ausführung des Küvettenblocks gemäß Figur 3. Während Veränderungen an den Fensterflächen der Meßkammer bei einem Küvettenkörper gemäß Figur 3 jedoch zu einer Nullpunktsverschiebung führen, bleibt bei dem Küvettenkörper 47 die Nullpunktlage stabil. Dieser Vorteil wird zwar durch ein vermindertes Gesamtsignal und eine Grundpegelabhängigkeit erkauft. Der bei der Analyse von aggressiven oder nicht reinigbaren Gasen erzielbare Vorteil überwiegt aber bei wei- tem.

## Ansprüche

1. Analysengerät zur Durchführung von Absorptionsspektralanalysen nach dem Prinzip der Vergleichsstrahlmessung, bei dem ein die in einer Meßkammer befindliche Probe durchdringender Meßstrahl und ein Vergleichsstrahl, die von einer gemeinsamen Lichtquelle ausgehen, von einem Signalempfänger erfaßt und mitein- ander verglichen werden, **dadurch gekenn- zeichnet**, daß der Vergleichsstrahl durch einen der Meßkammer (11, 42, 50) benachbarten, festen Körper (10, 38, 48) geleitet wird, der aus dem gleichen transparenten Material besteht, wie die Fenster der Meßkammer (11, 42, 50).

2. Analysengerät nach Anspruch 1, dadurch gekennzeichnet, daß der feste Körper (48) eine im Vergleichsstrahl liegende Vergleichskammer (55) enthält, deren Absorptionslänge die Absorptionslänge der Meßkammer (50) erheblich unterschreitet und die mit der in der Meßkammer (50) enthaltenen Probe gefüllt ist.

3. Analysengerät nach einem der Ansprüche 1 oder 2, dadurch gekennzeichnet, daß die Meßkammer (11, 42, 50) und der feste Körper (10, 38, 48) für den Vergleichsstrahl durch einen einstückigen Küvettenblock (10, 35, 47) gebildet sind, der auswechselbar in einen mit einer optischen Bank fest verbindbaren Halter (1) eingesetzt ist.

4. Analysengerät nach einem der Anprüche 2 oder 3, dadurch gekennzeichnet, daß die Vergleichskammer (55) von der Meßkammer (50) abzweigt und durch die Meßkammer (50) mit Probemedium gefüllt wird.

5. Analysengerät nach einem der vorhergehenden Ansprüche, dadurch gekennzeichnet, daß die Oberfläche des Küvettenblocks (10, 35, 47) in Bezug auf die Mittelebene zwischen Meß- und Vergleichsstrahl symmetrisch ist.

6. Analysengerät nach einem der vorhergehenden Ansprüche, dadurch gekennzeichnet, daß der Küvettenblock (10, 35, 47) vollständig aus einem homogenen, inerten Werkstoff, vorzugsweise aus Glas, Quarz, Kalziumfluorid oder Bariumfluorid besteht.

7. Analysengerät nach einem der vorhergehenden Ansprüche, dadurch gekennzeichnet, daß der Küvettenblock (10, 35, 47) eine ebene, seitliche Anschlußfläche (16) hat, von der we- nigstens eine Anschlußöffnung zur Meßkam- mer (11, 42) führt.

8. Analysengerät nach einem der vorhergehenden Ansprüche, dadurch gekennzeichnet, daß die seitliche Anschlußfläche (16) oder zusätzlich auch die dieser entgegengesetzte Fläche des Küvettenblocks (10, 35, 47) mit einer lichtundurchlässigen, vorzugsweise schwarzen Schicht (17, 36, 45, 52, 53) abgedeckt ist.

9. Analysengerät nach einem der vorhergehenden Ansprüche, dadurch gekennzeichnet, daß der Küvettenblock (10) in der Mittelebene zwischen der Meßkammer (11) und dem festen Körper auf der dem Signalempfänger zugekehrten Seite einen ebenen Trennschlitz (34) aufweist.

10. Analysengerät nach einem der vorhergehenden Ansprüche, dadurch gekennzeichnet, daß der Küvettenblock (35, 47) in der Mittelebene eine lichtundurchlässige Schicht (37, 51) aufweist.

11. Analysengerät nach einem der vorhergehenden Ansprüche, dadurch gekennzeichnet, daß die lichtundurchlässigen Schichten (17, 36, 37, 45, 51, 52, 53) auf der Anschlußfläche (16), der entgegengesetzten Fläche und in der Mittelebene bei einem aus Quarz hergestellen Küvettenblock aus schwarzem Quarz bestehen.

12. Analysengerät nach einem der vorhergehenden Ansprüche, dadurch gekennzeichnet, daß der Küvettenblock (10, 35, 47) und/oder die lichtundurchlässigen Schichten (17, 36, 37, 45, 51, 52, 53) aus einzelnen Platten bestehen, die gasdicht miteinander verbunden, vorzugsweise miteinander verschmolzen sind.

13. Analysengerät nach einem der vorhergehenden Ansprüche, dadurch gekennzeichnet, daß der Halter für den Küvettenblock aus einem Gehäuse (1) besteht, das einen Abschnitt eines optischen Tubus bildet und eine seitliche, durch einen Deckel (27, 28) verschließbare Öffnung aufweist, durch die der Küvettenblock (10, 35, 47) einsetzbar bzw. herausnehmbar ist.

14. Analysengerät nach einem der vorhergehenden Ansprüche, dadurch gekennzeichnet, daß ein Anschlußelement vorgesehen ist, das mit einer konzentrische Anschlußnuten (20, 21) enthaltenden Kontaktfläche auf die Anschlußfläche (16) des Küvettenblocks (10) aufsetzbar ist, wobei die an Anschlußleitungen (23) angeschlossenen Anschlußnuten (20, 21) mit der Meßkammer (11) in Verbindung treten.

15. Analysengerät nach einem der vorhergehenden Ansprüche, dadurch gekennzeichnet, daß in einer die Anschlußnuten (20, 21) umgebenden Ringnut ein Dichtring (25) angeordnet ist, der sich auf die Anschlußfläche (16) des Küvettenblocks (10) auflegt.

16. Analysengerät nach einem der vorhergehenden Ansprüche, dadurch gekennzeichnet, daß das Anschlußelement (18) von dem Deckel (27, 28) des Gehäuses (1) getragen wird.

17. Analysengerät nach einem der vorhergehenden Ansprüche, dadurch gekennzeichnet, daß das Anschlußelement (18) von einem Schutzgehäuse (28) umgeben ist, dessen Innenraum gemeinsam mit dem Innenraum (5) des Gehäuses (1) mit einem Spülmedium durchspülbar ist.

FIG. 1

## FIG. 2

FIG.3

46

45

40

44

41

39

43

42

36 37 38 35

S

FIG.4

FIG.5

54

54

53

49

50

51

48

55

52

47

47